# FASCICULE DE BREVET EUROPEEN

(11) **EP 0 463 941 B1**
(45) Date de publication et mention de la délivrance du brevet: **16.03.1994**
(21) Numéro de dépôt: 91401669.6
(22) Date de dépôt: 20.06.1991
(51) Int. Cl.: F16F 15/12, F16D 13/68

(54) **Dispositif amortisseur de torsion, notamment pour disque de friction d'embrayage de véhicule automobile**
Torsionsdämpfende Vorrichtung für Reibplatte einer Kraftfahrzeugkupplung
Torsional damping device, for friction disc of automotive vehicle clutch

(30) Priorité: 22.06.1990 FR 9007866
(43) Date de publication de la demande: 02.01.1992
(73) Titulaire: VALEO, 75848 Paris Cédex 17 (FR)
(72) Inventeur: Graton, Michel, F-75020 Paris (FR)
(74) Mandataire: Gamonal, Didier

(56) Documents cités:
- DE-A- 3 920 588
- FR-A- 2 386 729
- GB-A- 2 089 472
- GB-A- 2 203 515

## Description

La présente invention se rapporte à un dispositif amortisseur de torsion, notamment pour disque de friction d'embrayage de véhicule automobile, comportant deux parties coaxiales mobiles angulairement l'une par rapport à l'autre, suivant une course limitée, à l'encontre de premiers moyens élastiques, dispositif dans lequel une de ces parties est elle-même composée d'un voile et d'un moyeu coaxiaux mobiles angulairement l'un par rapport à l'autre, à l'encontre de deuxièmes moyens élastiques, dans un secteur de débattement angulaire défini par des dentures complémentaires, avec jeu circonférentiel, du voile et du moyeu.

Un tel dispositif est décrit dans le document FR-A-2 496 210 et comporte des troisièmes moyens élastiques interposés entre le voile et le moyeu et adaptés à permettre une venue en butée circonférentielle des dentures du voile et du moyeu avec un effet de freinage anti-bruit.

Grâce à cette disposition, on adoucit la venue en butée des dentures du voile et du moyeu et on évite les bruits.

Dans une réalisation ces moyens consistent en au moins un anneau engagé autour d'une des dents d'une des dentures dans une gorge de cette dent et adapté à être comprimé par les dents voisines de l'autre denture. Dans d'autres réalisations, les blocs élastiques sont incorporés dans des logements ménagés dans les dentures.

De telles solutions sont efficaces à l'état neuf mais peut se détériorer dans le temps. En outre, les dentures sont affaiblies et l'on ne peut transmettre un couple aussi élevé que désiré.

La présente invention a pour objet de pallier ces inconvénients, et donc de créer de nouveaux troisièmes moyens élastiques d'une grande durée de vie, tout en fragilisant le moins possible les dentures.

Suivant l'invention, un dispositif du type sus-indiqué est caractérisé en ce que les troisièmes moyens élastiques sont constitués par une rondelle s'étendant parallèlement au voile et pourvue d'une denture en matière élastique complémentaire à celle du moyeu, engrenant avec ladite denture du moyeu avec un jeu circonférentiel inférieur au jeu circonférentiel prévu entre les dentures du voile et du moyeu, et en ce que la denture du moyeu est prolongée axialement pour pouvoir engrener avec le voile et ladite rondelle.

Grâce à l'invention, la matière comprimée, avant venue en butée positive des dents du voile avec celles du moyeu, est augmentée, ce qui permet d'accroître la durée de vie des troisièmes moyens élastiques. En outre, le voile de moyeu a une résistance accrue, du fait que ses dents ne sont pas entaillées ou creusées pour formation de logements. Il en est de même en ce qui concerne le moyeu dont les dents sont épaissies. De plus, il est possible d'avoir un meilleur réglage de la raideur par modification de la matière élastique ou du volume de la matière élastique comprimé, qui en fonctionnement n'est pas comprimée entre les dentures du voile et du moyeu.

Enfin, on appreciera que les deuxièmes moyens élastiques n'ont pas besoin d'être modifiés.

La description en annexe illustre l'invention, à titre d'exemple, en référence aux dessins annexés dans lesquels :
- la figure 1 est une vue en coupe axiale d'un disque de friction de l'art antérieur ;
- la figure 2 est une vue à plus grande échelle et en élévation des dentures du voile et du moyeu entre lesquels sont disposés les blocs selon l'art antérieur ;
- la figure 3 est une demi-vue analogue à la figure 2 montrant la rondelle selon l'invention ;
- les figures 4 et 5 sont des vues en coupe axiale montrant la périphérie interne du disque de friction respectivement pour un premier et deuxième exemple de réalisation.

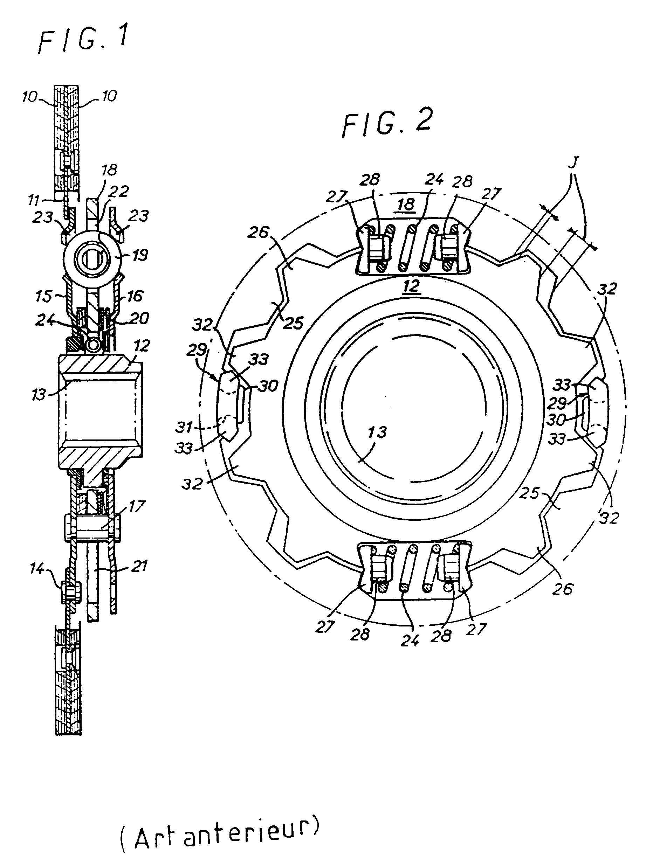

Le mode de réalisation des figures 1 et 2, concerne une application à un dispositif amortisseur de torsion pour un disque de friction d'embrayage de véhicule automobile et est identique à celui décrit dans le document FR-A-2 496 210.

Ce dispositif amortisseur comporte deux parties coaxiales 15-16-11-10 et 18-12 mobiles angulairement l'une par rapport à l'autre, suivant une course limitée, à l'encontre de premiers moyens élastiques 19. L'une (18-12) de ces parties est elle-même composée d'un voile 18 et d'un moyeu 12 coaxiaux, mobiles angulairement l'un par rapport à l'autre à l'encontre de deuxièmes moyens élastiques 24, dans un secteur de débattement angulaire défini par des dentures complémentaires 25,26 avec jeu circonférentiel J, du voile 18 et du moyeu 12. Des troisièmes moyens élastiques, qui permettent une venue en butée circonférentielle positive de la denture 25 du voile 18 avec la denture 26 du moyeu 12 tout en procurant un effet de freinage anti-bruit, sont interposés entre le voile 18 et le moyeu 12. Les dentures 25,26 comportent chacune des dents alternant circonférentiellement avec des échancrures.

Dans la figure 2 ces troisièmes moyens consistent en deux blocs 29 sous forme d'anneaux engagés chacun autour d'une des dents 30 d'une desdites dentures 25,26 dans une gorge 31 de cette dent 30. Ces blocs sont adaptés à être comprimés par les dents voisines 32 de l'autre denture.

La première partie comporte des garnitures de friction 10, qui sont montées sur une plaque annulaire 11. Les garnitures 10, portées par la plaque 11, sont adaptées à être pincées entre les plateaux de pression et de réaction de l'embrayage solidaires en rotation d'un arbre moteur. Le moyeu 12 de la deuxième partie est adapté à être engagé, par des cannelures 13, sur un arbre mené (non représenté) formant l'arbre d'entrée de la boîte de vitesses du véhicule automobile.

La plaque 11 est fixée par des rivets 14 à une rondelle de guidage 15 elle-même reliée par des entretoises, ici colonnettes 17 traversant le voile 18 à la faveur d'échancrures de celui-ci, à une autre rondelle de guidage 16. Les rondelles 15,16 sont montées tournantes autour du moyeu 12 sans intervention de dentures, tandis que le voile 18 est disposé axialement entre les deux dites rondelles 15,16 en étant monté tournant par rapport au moyeu avec intervention des dentures 25,26.

Les premiers moyens élastiques 19 consistent en une pluralité de ressorts à boudin logés dans des fenêtres 22 du voile 18 et dans des fenêtres 23 en regard des rondelles de guidage 15,16.

Les deuxièmes moyens élastiques 24 sont moins raides que les premiers moyens élastiques 19 et comportent des ressorts à boudin interposés entre le voile 18 et le moyeu 12 par l'intermédiaire de plaquettes d'appui 27 présentant une face dorsale en forme de dièdre, et des tétons 28 de centrage des ressorts 24. Ces ressorts 24 ont essentiellement pour rôle d'éviter des bruits, tels que bruit de boîte de vitesses ou bruit de point mort, lorsque le couple transmis par le dispositif amortisseur de torsion est nul ou faible. Ils sont montés dans des échancrures pratiquées pour partie à la périphérie interne du voile 18 et pour partie à la périphérie externe du moyeu 12, avec interruption des dentures 25,26.

Les ressorts 19, en combinaison avec des moyens de frottement 20, sont interposés entre les deux dites parties et ont essentiellement pour rôle d'amortir les vibrations qui prennent naissance entre l'arbre moteur et l'arbre mené lorsque le véhicule roule. Les ressorts 18,19 sont donc à action circonférentielle.

Les troisièmes moyens élastiques sont prévus pour supprimer ou atténuer les inconvénients d'une venue en butée d'une manière violente et brutale des dentures 25 et 26 du voile 18 et du moyeu 12.

Par simplicité, les éléments communs à la présente invention et à l'art antérieur seront affectés des mêmes références.

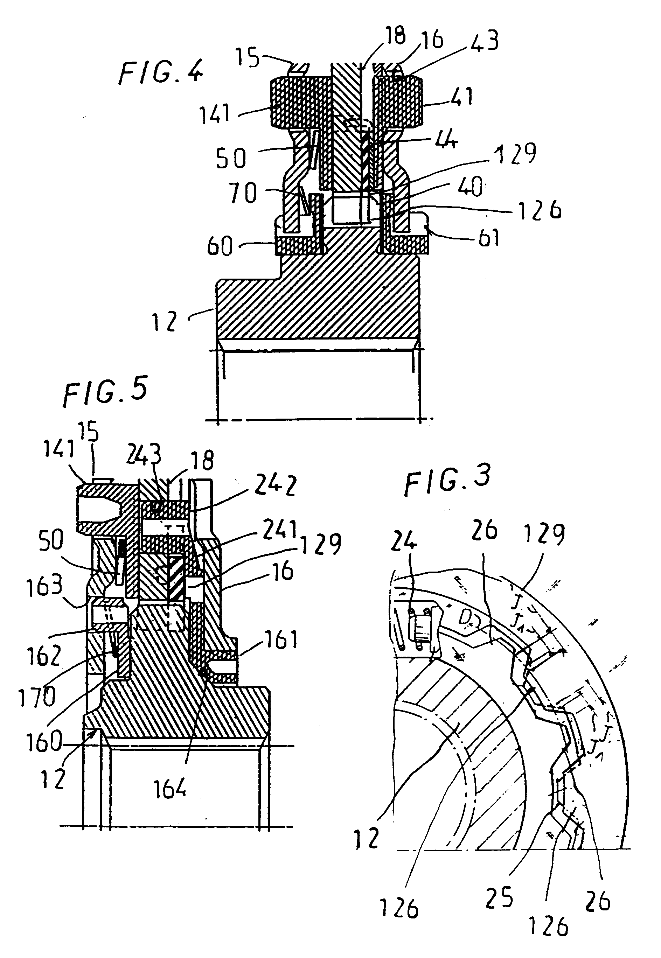

Suivant l'invention, un dispositif amortisseur de torsion du type sus-indiqué est caractérisé en ce que les troisièmes moyens élastiques sont constitués par une rondelle 129 s'étendant parallèlement au voile 18 et pourvue d'une denture 126 en matière élastique complémentaire à celle du moyeu 12, engrenant avec ladite denture 26 du moyeu 12 avec un jeu circonférentiel J1 inférieur au jeu circonférentiel J (figure 3) prévu entre la denture 25 du voile 18 et la denture 26 du moyeu 12, et en ce que la denture 26 du moyeu 12 est prolongée axialement pour pouvoir engrener avec le voile 18 et ladite rondelle 129.

La denture 126 présente des dents de forme trapézoïdale, comme les dentures 25,26, s'engageant avec jeu dans des échancrures complémentaires prévues dans la denture 26 du moyeu 12, avec alternance des dents et des échancrures. Elle s'étend parallèlement à la denture 25, ses dents débordant circonférentiellement par rapport aux dents de la denture 25, à cause des jeux J et J1. Les dents de la denture 126 recouvrent radialement en majeure partie celles de la denture 25, seule l'extrémité interne de celles-ci n'est pas recouverte. Bien entendu cela dépend des applications.

Ici, toute la rondelle est en matière élastique, tel que du caoutchouc. Mais bien entendu, une partie de la rondelle peut être rigide, étant entendu que la périphérie interne de ladite rondelle est en matière élastique pour pouvoir coopérer avec la denture 26.

Ainsi, aucune des dentures 25,26 n'est entaillée et celles-ci peuvent venir en butée positive l'une sur l'autre. Ceci est favorisé grâce au fait que la rondelle 129 s'étend parallèlement au voile 18.

A la figure 4 le moyeu 12 présente à sa périphérie externe une bride 40 dans laquelle est formée la denture 26 et la rondelle 129 est accolée au voile 18. Cette rondelle est insérée axialement entre la rondelle de guidage 16 et le voile 18.

Plus précisément, entre les pièces 16 et 18 sont interposées successivement axialement une rondelle de frottement 41, une rondelle métallique 44 et enfin la rondelle 129. La rondelle 41, de préférence en matériau à bas coefficient de frottement, tel que du polyamide est solidaire en rotation de la rondelle de guidage 16 par une pluralité de tétons 42 engagés de manière complémentaire dans des trous 43 de la rondelle 16. La rondelle 44 est solidaire de la rondelle 129 par adhérisation ou collage. Entre la rondelle de guidage 15 et le voile 18, sont interposées successivement une rondelle élastique à action axiale 50 et une rondelle de frottement 141. La rondelle 141 est identique à la rondelle 41 et est donc liée en rotation à la rondelle de guidage 15, ici identique à la rondelle 16, par des tétons engagés dans des trous de ladite rondelle 15.

La rondelle 50, ici sous forme de rondelle Belleville, prend appui sur la rondelle 15 et sur la rondelle 141 en provoquant un serrage des rondelles 41,44,129 entre le voile 18 et l'autre rondelle de guidage 16.

Des paliers anti-friction 60,61 à section en forme de L, sont interposés radialement respectivement entre la périphérie interne de chaque rondelle 15,16 et la périphérie externe du moyeu 12. Ces paliers sont interposés axialement respectivement entre la bride 40 et chaque rondelle 15,16. Ici les paliers 60,61 sont identiques entre eux et sont liés en rotation aux rondelles 15,16 par coopération de formes, lesdits paliers présentant des lunules (voir figure 1 du susmentionné document FR-A-2 496 210), s'engageant dans des encoches complémentaires formées à la périphérie interne des rondelles 15,16.

Une rondelle élastique 70 à action axiale, ici sous forme de rondelle Belleville, disposée radialement à l'intérieur de la rondelle 50, prend appui sur la rondelle 15 et sollicite le palier 60 au contact de la bride 40, pour serrage axial de la partie radiale de l'autre palier 61, entre la rondelle 16 et la bride 40. Ici la charge de la rondelle 70 est inférieure à la rondelle 50.

Suivant une caractéristique de l'invention, la rondelle 129 est solidaire du voile 18 par adhérisation ou collage. En variante cette rondelle 129, solidaire de la rondelle 44, peut être solidaire en rotation du voile grâce à des pattes axiales de la rondelle 44 s'engageant dans des ouvertures complémentaires du voile 18 comme représentées en pointillés à la figure 4. Ces pattes sont issues de la périphérie externe de la rondelle 44 et s'étendent radialement au-dessus de la rondelle 129. Dans tous les cas, la rondelle 129 est montée dans la position de la figure 3 au repos avec débordement circonférentiel des dents de la denture 126 par rapport aux dents de la denture 25.

Bien entendu on peut lier en rotation la rondelle 129 à la rondelle 44, par coopération de formes, ladite rondelle 129 présentant alors des échancrures pour coopération avec lesdites pattes de la rondelle 44. Avantageusement, ces échancrures sont formées dans une partie rigide que présente à sa périphérie externe la rondelle 129.

En variante le voile 18 peut être solidaire en rotation de la rondelle 129 par serrage axial provoqué par la rondelle 50. Quoiqu'il en soit, lors du fonctionnement, dans un premier temps, les ressorts 19 étant plus raides que les ressorts 24, le voile 18 est admis à se déplacer angulairement par rapport au moyeu 12, à l'encontre des ressorts 24 et de moyens de frottement 70,60,61 jusqu'à ce que les dents de la denture 26 viennent en contact avec les dents de la denture 126 de la rondelle 129, avec un effet de freinage, et puis enfin jusqu'à ce que les dentures 26,25 viennent en contact l'une avec l'autre.

On notera que la matière de la rondelle 129 peut fluer librement dans le sens aval, et que la zone de contact entre les dents des dentures 126,26 est plus étendue que dans le cas de la figure 2.

Dans un deuxième temps, le voile 18 étant solidaire en rotation du moyeu 12, les ressorts 19 sont admis à être comprimés et les moyens de frottement 50,141,44,41 interviennent. Au cours de ce mouvement un frottement se produit entre les rondelles 41 et 44; la rondelle 44 protègeant ainsi la rondelle 129.

En variante, le palier 61 est remplacé par un palier conique 161 (figure 5) en contact avec une portée conique 164 prévu sur le moyeu 12 tandis que l'autre palier est supprimé. Ce palier est remplacé par une rondelle 160 au contact de la bride 40, ladite rondelle 160 comportant des tétons 162 engagés dans des ouvertures complémentaires 163 pour liaison en rotation avec la rondelle de guidage 15.

La rondelle élastique, référencée ici en 170, est liée en rotation à la rondelle 160 par coopération de formes et présente des échancrures coopérant avec les tétons 162.

Les rondelles 50 et 141 demeurent inchangées, par contre la rondelle 41 est remplacée par une rondelle 241 et la rondelle 44 est supprimée. Cette rondelle 241 prend appui sur la rondelle 16 et présente des tétons 242 engagés de manière complémentaire dans des ouvertures 243, que présente le voile 18 pour liaison en rotation avec celui-ci. Bien entendu, les rondelles 161,241 peuvent constituer une rondelle unique.

La rondelle 129 dans une première variante de réalisation est adhérisée au voile 18. Dans une deuxième variante de réalisation elle est adhérisée à la rondelle 241. Dans une troisième variante de réalisation (visible en pointillés), cette rondelle 129 est liée en rotation au voile 18 par des tétons pénétrant dans une encoche complémentaire prévue dans le voile 18 et telle que visible en pointillés dans cette figure. Bien entendu on peut inverser les structures, le voile 18 portant alors des tétons, et la rondelle 129 les trous complémentaires. Dans un quatrième exemple de réalisation (visible en pointillés), cette rondelle 129 est liée en rotation au voile 18 par coopération de formes avec les tétons 242, ladite rondelle 129 présentant à sa périphérie externe des encoches coopérant de manière complémentaire avec les tétons. Avantageusement, la rondelle 129 est alors, comme dans le troisième exemple, en deux parties solidaires l'une de l'autre avec une partie interne en matière élastique pourvue des dents 126 et une partie externe rigide portant les encoches ou tétons. Les dispositifs fonctionnent comme celui de la figure 1.

Bien entendu la présente invention n'est pas limitée aux exemples de réalisation décrits. En particulier, les moyens élastiques 19 peuvent appartenir à un préamortisseur disposé entre le voile 18 et l'une des rondelles de guidage, comme décrit dans le document DE-A-38 10 922, étant entendu que la denture de la bride du moyeu est prolongée axialement pour engrener avec la rondelle selon l'invention. De préférence alors, la rondelle selon l'invention est liée en rotation par coopération de formes avec les entretoises et possède des échancrures pour coopérer par emboîtement avec lesdites entretoises.

En variante les moyens élastiques 19,24 peuvent comporter des blocs en matière élastique.

Enfin les jeux J et J1 peuvent ne pas être symétriques au repos, cela dépendant des applications.

## Revendications

1. Dispositif amortisseur de torsion, notamment pour véhicule automobile du genre comportant deux parties coaxiales (15-16-11-10 et 18-12) mobiles angulairement l'une par rapport à l'autre suivant une course limitée, à l'encontre de premiers moyens élastiques (19), dispositif dans lequel l'une (18-12) de ces parties est elle-même composée d'un voile (18) et d'un moyeu (12) coaxiaux, mobiles angulairement l'un par rapport à l'autre à l'encontre de deuxièmes moyens élastiques (24), dans un secteur de débattement angulaire défini par des dentures complémentaires (25,26), avec jeu circonférentiel (J), du voile (18) et du moyeu (12), et dans lequel des troisièmes moyens élastiques (129), qui permettent une venue en butée circonférentielle positive de la denture (25) du voile (18) avec la denture (26) du moyeu (12) tout en procurant un effet de freinage anti-bruit, sont prévus, caractérisé en ce que les troisièmes moyens élastiques (129) sont constitués par une rondelle (129) s'étendant parallèlement au voile (18) et pourvue d'une denture (126) en matière élastique complémentaire à celle du moyeu (12), engrenant avec ladite denture (26) du moyeu (12) avec un jeu circonférentiel (J1) inférieur au jeu circonférentiel (J) prévu entre les dentures (25) du voile (18) et (26) du moyeu (12), et en ce que la denture (26) du moyeu (12) est prolongée axialement pour pouvoir engrener avec le voile (18) et ladite rondelle (129).

2. Dispositif selon la revendication 1, caractérisé en ce que ladite denture (126), en matière élastique, de ladite rondelle (129) présente des dents débordant circonférentiellement par rapport aux dents de la denture (25) du voile (18).

3. Dispositif selon la revendication 1 ou 2, caractérisé en ce que les dents de ladite denture (126) de la rondelle (129) des troisièmes moyens élastiques recouvrent radialement en majeure partie celles de la denture (25) du voile (18), en s'étendant parallèlement à celles-ci.

4. Dispositif selon l'une quelconque des revendications 1 à 3, caractérisé en ce qu'une partie de la rondelle (129) des trosièmes moyens élastiques est rigide, sa périphérie interne étant en matière élastique.

5. Dispositif selon l'une quelconque des revendications 1 à 4, caractérisé en ce que ladite rondelle (129) à denture (126) en matière élastique est liée en rotation au voile (18).

6. Dispositif selon la revendication 5, caractérisé en ce que ladite rondelle (129) à denture (126) en matière élastique est liée au voile (18) par adhérisation ou collage.

7. Dispositif selon la revendication 5, caractérisé en ce que ladite rondelle (129) à denture (126) en matière élastique est liée au voile (18) par l'intermédiaire d'une rondelle elle-même liée en rotation audit voile (18).

8. Dispositif selon la revendication 7, caractérisé en ce que ladite rondelle (129) à denture (126) en matière élastique est liée par coopération de formes à ladite rondelle (241,44).

9. Dispositif selon la revendication 5, caractérisé en ce que ladite rondelle (129) à denture (126) en matière élastique est liée en rotation au voile (18) par des tétons de celle-ci pénétrant dans des encoches complémentaires du voile (18).

10. Dispositif selon la revendication 5, caractérisé en ce que ladite rondelle (129) à denture (126) en matière élastique est liée par serrage axial au voile (18) sous l'action d'une rondelle élastique à action axiale interposée entre le voile (18) et une rondelle de guidage (15) appartenant à l'autre partie coaxiale.

## Patentansprüche

1. Drehschwingungsdämpfer, insbesondere für Kraftfahrzeuge, enthaltend zwei koaxiale Teile (15-16-11-10 und 18-12), die im Verhältnis zueinander entsprechend einem begrenzten Hub winklig gegen erste elastische Mittel (19) bewegbar sind, wobei einer (18-12) dieser Teile selbst aus einem koaxialen Flansch (18) und einer koaxialen Nabe (12) besteht, die im Verhältnis zueinander winklig gegen zweite elastische Mittel (24) in einem Winkelverschiebungssektor bewegbar sind, der durch ergänzende Verzahnungen (25, 26) begrenzt ist, mit einem Umfangsspiel (J) des Flanschs (18) und der Nabe (12), und worin dritte elastische Mittel (129) vorgesehen sind, die einen positiven Umfangsanschlag zwischen der Verzahnung (25) des Flanschs (18) und der Verzahnung (26) der Nabe (12) erlauben und gleichzeitig eine geräuschmindernde Bremswirkung entfalten, **dadurch gekenn****zeichnet**, daß die dritten elastischen Mittel (129) aus einer Scheibe (129) bestehen, die sich parallel zum Flansch (18) erstreckt und mit einer Verzahnung (126) aus elastischem Material versehen ist, die zu derjenigen der Nabe (12) paßt und mit der genannten Verzahnung (26) der Nabe (12) mit einem Umfangsspiel (J1) in Eingriff steht, welches kleiner ist als das zwischen den Verzahnungen (25) des Flanschs (18) und (26) der Nabe (12) vorgesehene Umfangsspiel (J), und daß die Verzahnung (26) der Nabe (12) in axialer Richtung verlängert ist, um mit dem Flansch (18) und der genannten Scheibe (126) in Eingriff zu treten.

2. Vorrichtung nach Anspruch 1, **dadurch gekennzeichnet**, daß die genannte Verzahnung (126), aus elastischem Material, der genannten Scheibe (129) Zähne aufweist, die am Kreisumfang im Verhältnis zu den Zähnen der Verzahnung (25) des Flanschs (18) überstehen.

3. Vorrichtung nach Anspruch 1 oder 2, **dadurch gekennzeichnet**, daß die Zähne der genannten Verzahnung (126) der Scheibe (129) der dritten elastischen Mittel radial diejenigen der Verzahnung (25) des Flanschs (18) größtenteils bedecken und sich parallel zu diesen erstrecken.

4. Vorrichtung nach einem der Ansprüche 1 bis 3, **dadurch gekennzeichnet**, daß ein Teil der Scheibe (129) der dritten elastischen Mittel starr ist und ihre Innenperipherie aus Kunststoff besteht.

5. Vorrichtung nach einem der Ansprüche 1 bis 4, **dadurch gekennzeichnet**, daß die genannte Scheibe (129) mit Verzahnung (126) aus elastischem Material drehbeweglich mit dem Flansch (18) verbunden ist.

6. Vorrichtung nach Anspruch 5, **dadurch gekennzeichnet**, daß die genannte Scheibe (129) mit Verzahnung (126) aus elastischem Material durch Haftung oder Verklebung mit dem Flansch (18) verbunden ist.

7. Vorrichtung nach Anspruch 5, **dadurch gekennzeichnet**, daß die genannte Scheibe (129) mit Verzahnung (126) aus elastischem Material über eine Scheibe mit dem Flansch (18) verbunden ist, die ihrerseits drehbeweglich mit dem genannten Flansch (18) verbunden ist.

8. Vorrichtung nach Anspruch 7, **dadurch gekennzeichnet**, daß die genannte Scheibe (129) mit Verzahnung (126) aus elastischem Material durch Formschluß mit der genannten Scheibe (241, 44) verbunden ist.

9. Vorrichtung nach Anspruch 5, **dadurch gekennzeichnet**, daß die genannte Scheibe (129) mit Verzahnung (126) aus elastischem Material drehbeweglich mit dem Flansch (18) über daran befindliche Zapfen verbunden ist, die in ergänzende Einschnitte im Flansch (18) eindringen.

10. Vorrichtung nach Anspruch 5, **dadurch gekennzeichnet**, daß die genannte Scheibe (129) mit Verzahnung (126) aus elastischem Material durch axiale Einspannung mit dem Flansch (18) unter Einwirkung einer axial wirksamen Federscheibe verbunden ist, die zwischen dem Flansch (18) und einer zum anderen koaxialen Teil gehörenden Führungsscheibe (15) eingesetzt ist.

## Claims

1. A torsion damping device, especially for a motor vehicle, of the kind comprising two coaxial parts (15-16-11-10 and 18-12) which are movable in rotation with respect to each other over a limited range of displacement, against the action of first resilient means (19), in which device one (18-12) of the said parts itself comprises a damper plate (18) and a hub (12), which are coaxial with each other and movable in rotation with respect to each other against second resilient means (24), over a sector of angular displacement which is defined by complementary sets of teeth (25, 26), defining a circumferential clearance (J), of the damper plate (18) and of the hub (12), and in which third resilient means (129) are provided which enable the set of teeth (25) of the damper plate (18) to come into positive circumferential abutment with the set of teeth (26) of the hub (12) while producing a noise suppressing braking action, characterised in that the third resilient means (129) consist of a ring (129) which extends parallel to the damper plate (18), and which is provided with a set of teeth (126) of resilient material, complementary to that of the hub (12) and meshing with the said set of teeth (26) of the hub (12) with a circumferential clearance (J1), which is smaller than the circumferential clearance (J) defined between the sets of teeth (25) of the damper plate (18) and (26) of the hub (12), and in that the set of teeth (26) of the hub (12) is extended axially so that it can mesh with the damper plate (18) and the said ring (129).

2. A device according to Claim 1, characterised in that the said set of teeth (126), of resilient material, of the said ring (129) has teeth which overlap circumferentially the teeth in the set of teeth (25) of the damper plate (18).

3. A device according to Claim 1 or Claim 2, characterised in that the teeth in the said set of teeth (126) of the ring (129) of the third resilient means are in radial overlying relationship over the greater part of those of the set of teeth (25) of the damper plate (18), and extend parallel to these latter.

4. A device according to any one of Claims 1 to 3, characterised in that a portion of the ring (129) of the third resilient means is rigid, with its inner periphery being of resilient material.

5. A device according to any one of Claims 1 to 4, characterised in that the said ring (129), with its set of teeth (126) of resilient material, is coupled in rotation to the damper plate (18).

6. A device according to Claim 5, characterised in that the said ring (129), with its set of teeth (126) of resilient material, is coupled to the damper plate (18) by adhesive attachment or bonding.

7. A device according to Claim 5, characterised in that the said ring (129), with its set of teeth (126) of resilient material, is coupled to the damper plate (18) through a ring which is itself coupled in rotation to the said damper plate (18).

8. A device according to Claim 7, characterised in that the said ring (129), with its set of teeth (126) of resilient material, is coupled to the said ring (241, 44) by mating cooperation.

9. A device according to Claim 5, characterised in that the said ring (129), with its set of teeth (126) of resilient material, is coupled in rotation to the damper plate (18) by means of spigots of the latter engaging in complementary recesses of the damper plate (18).

10. A device according to Claim 5, characterised in that the said ring (129), with its set of teeth (126) of resilient material, is coupled in axial gripping relationship to the damper plate (18) under the action of an axially acting resilient ring, which is interposed between the damper plate (18) and a guide ring (15) of the other coaxial part.
